# EUROPEAN PATENT APPLICATION

(11) **EP 4 717 526 A1**
(43) Date of publication of application: **01.04.2026**
(21) Application number: 25197029.9
(22) Date of filing: 20.08.2025
(51) Int. Cl.: B60R 16/023, B60R 16/03

(54) **VEHICLE POWER MANAGEMENT**

(30) Priority: 27.09.2024 US 202418899311
(71) Applicant: INTEL Corporation, Santa Clara, CA 95054 (US)
(72) Inventor: GIGNAC, Donald Raymond, Lake Oswego, 97035 (US); ELLI, Maria Soledad, Seattle, 98109 (US); TRUITT, Karen, Decatur, 30030 (US); SINGH, Ruchika, Chandler, 85249 (US)
(74) Representative: HGF

(57) **Abstract**

System and techniques for controlling or adjusting the power use of components in a vehicle are described herein. The technique may include obtaining a log of power use that records the power consumption of a component over a specified time period. Context data corresponding to this time period is collected, and a repetition metric is derived from the power consumption data. From this, a scenario context from the context data may be identified based on the repetition metric. A vehicle power profile is generated based on the identified scenario context and is subsequently applied within the vehicle to regulate a power function of the vehicle.

## Description

### BACKGROUND

The management of electrically powered vehicle subsystems involves the coordination of hardware and software components to control power distribution and system operation. Vehicle architectures use a hierarchical power management system to allocate power based on demand. Subsystems such as electric motors, electronic control units (ECUs), sensors, accessories (e.g., lights, music, etc.), or auxiliary functions receive power according to operational demands. Power states may be predefined, with systems transitioning between power states based on vehicle status, such as driving, idling, or charging. Subsystems like lighting and climate control may adjust power usage according to the current power state to preserve battery life.

Control algorithms govern the switching between power states to help ensure that critical subsystems like braking and steering maintain operation in all power states. Communication protocols like Controller Area Network (CAN) facilitate the transfer of commands or data between the vehicle's subsystems, enabling synchronized operation. Power policies may govern when or how subsystems enter low-power modes or high-demand states, ensuring efficient energy use and system reliability. Generally, power control is designed to prioritize safety-critical functions while optimizing overall energy consumption across the vehicle's electrical subsystems.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a block diagram of an example of an environment including a system for vehicle power management, according to an embodiment.
FIG. 2 illustrates an example of a component organization, according to an embodiment.
FIG. 3 illustrates an example of operations to implement power management impacted by non-vehicle components, according to an embodiment.
FIG. 4 illustrates a current and temperature plot over time indicating a component was added, according to an embodiment.
FIG. 5 illustrates a current and temperature plot over time indicating a component failure, according to an embodiment.
FIG. 6 illustrates an example of operations to implement power management impacted by vehicle components, according to an embodiment.
FIG. 7 illustrates a flow diagram of an example of a method for vehicle power management, according to an embodiment.
FIG. 8 is a block diagram illustrating an example of a machine upon which one or more embodiments may be implemented.

### DETAILED DESCRIPTION

Current approaches for the management of vehicle subsystems are often reliant on significant engineering or customization before the vehicle is manufactured. For example, power management at the vehicle level is often performed in a decentralized and static manner, using approaches that do not scale over time as vehicle architectures change from generation to generation. Each vehicle manufacturer (e.g., original equipment manufacturer (OEM)) often defines its own power-related requirements for the various ECUs used in the different vehicle subsystems of a vehicle design. This results in different hardware vendors of ECUs or ECU components defining different (e.g., proprietary) power management policies. Additionally, current vehicle architectures often do not provide consistent power management interfaces-for example, implemented at the software level-resulting in many variations of custom-made power management hardware and functions. Each of these issues may add inefficiencies to vehicles, especially during the integration of the hundreds of ECUs and devices that are included in modern vehicles, often sourced from a diverse set of suppliers.

Coupled to the complexity of modern power management designs for vehicles are the increasingly complicated user behavior that puts greater pressure on the power management systems. Non-driving behavior-such as movie streaming, worksite power generation, or tailgating-may increase power usage in non-trivial ways. The increasing availability of power at the vehicle provided by modern electric vehicles has resulted in ever greater use of electricity for non-driving tasks. However, this heavy usage, such as supplying power for worksite tools, can impact the usability (e.g., range) of these vehicles. Some vehicles today calculate remaining range based on current battery charge level with consideration given to additional loading while driving-such as a driving profile, acceleration, additional low voltage power load, etc. Generally, vehicle prognostics (e.g., component aging) is determined at an ECU level. These activities are generally informational and do not change much with different situations but rather based on the power-mode setting.

With respect to typical power mode settings, there are generally few (e.g., five) and most subsystems remain powered when the vehicle is in an accessory or a charging mode; the vehicle maintaining this power mode until the battery is critically low or a preset timer (e.g., timeout) is reached. Powering down unused subsystems is generally missing from current techniques. Further, these techniques do not track (e.g., learn) how a user uses the vehicle in any given power mode to more precisely power only the necessary components being used. Powered off subsystems may be activated, if required, but take longer to initialize because they are in a deep sleep or an off state to minimize the quiescent current draw.

To address the issues noted above, an active monitoring and vehicle power policy modification can provide power savings while enabling the use of vehicle power for a variety of activities. Components power use is monitored continuously, both during vehicle operation and when the vehicle is not moving (e.g., non-driving power use) to identify patterns of use (e.g., recurrence) through a repetition metric (e.g., identifiable periodicity or lack thereof in use). Scenarios (e.g., events, use cases, etc.) are identified by matching context data (e.g., where is the vehicle, what time of day is it, a trip plan, schedule, etc.) to repetitive power consumption. The power monitoring also enables the identification of vehicle components (e.g., ECUs, accessories, etc.) that are not used during the scenario. Thus, a custom vehicle power profile may be created that reduces power (e.g., sleeps, hibernates, or powers down) of these unused components for the duration of the scenario to conserve power while enabling the user to fully enjoy the power offered by the vehicle. Further, the accurate power consumption monitoring enables accurate range reporting (e.g., how much distance the vehicle may yet travel after the scenario is terminated) following component use in the scenario. Additionally, the typical use patterns of components may be compared to anomalous measurements to provide prognostic data as to the health (e.g., aging, failure, etc.) of components. Additional details and examples are provided below.

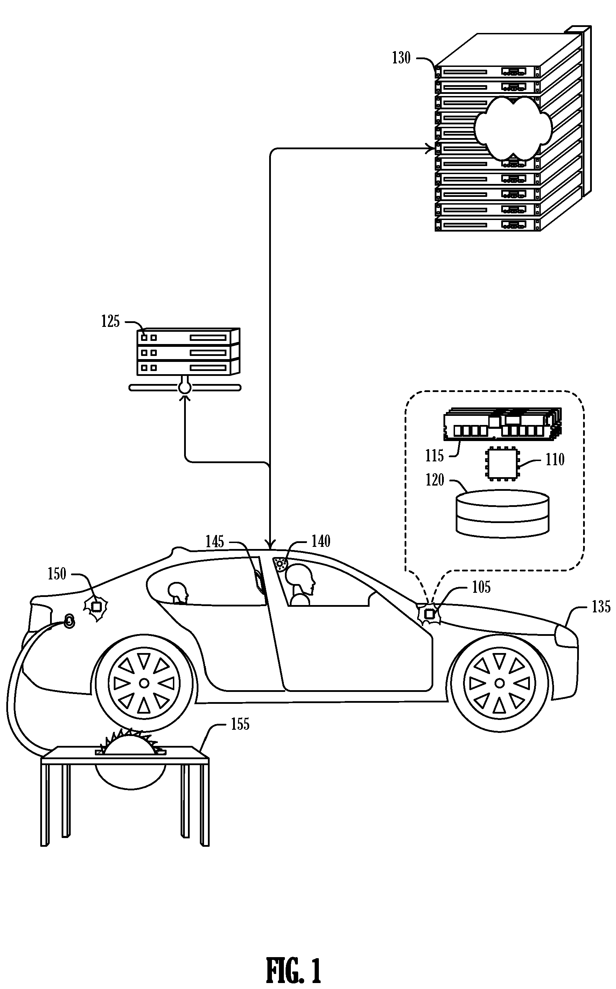

FIG. 1 is a block diagram of an example of an environment including a system 105 for vehicle power management, according to an embodiment. The system 105 includes processing circuitry 110, storage 120 (e.g., power-stable storage such as a hard drive, solid state drive, etc.), and memory 115. The memory 115 is generally used to maintain running state information for the system 105 that is usually discarded between system power cycles or restarts. The memory 115 and the storage 120 are both forms of computer readable media. The processing circuitry 110-or software residing in the memory 115 or storage 120 executing on the processing circuitry 110-configure the system 105 to perform various operations when in running. As illustrated, the system 105 may be implemented as a separate physical component (e.g., connected by the CAN bus or other network) to ECUs in the vehicle or part of an ECU or other component of the vehicle. The following examples of implementing vehicle power management are discussed from the perspective of the processing circuitry 110, though other components may replace the processing circuitry 110 as appropriate.

The processing circuitry 110 is configured to obtain (e.g., create, receive, retrieve, etc.) a log of power use for a component connected to a power supply of the vehicle. The log may be in a flat file, a structured data structure (e.g., a database) or any other forms that enables the log to include a time-based record of power consumption for the component over a time period. In an example, component may be part of the vehicle (e.g., manufacture with the vehicle or installed in such a way that it is not easily removable (e.g. screwed in-place, held by a bracket, etc.). Typically, installed components will be powered by a power rail or other component of the vehicle wiring harness. FIG. 1 illustrates several of these components, including a proximity sensor 135, internal lights 140, and an ECU 150. In an example, the component is not installed in the vehicle. Such components are powered by a plug (e.g., universal serial bus (USB) or charging port) or wireless port of the vehicle. These components, such as tablets (e.g., tablet 145), mobile phones, tools (e.g., a saw 155 at a worksite), etc. may usually be removed by the user by simply unplugging the device from the plug. Thus, the log covers all components that draw power from the vehicle.

The processing circuitry 110 is configured to obtain context data for the time period. Context data is other known data and may include things like a calendar (e.g., schedule) for the driver or a passenger of the vehicle, a trip plan, a subscription service, an access point (AP) that is available, a time of day, a day of week, whether it is a holiday, among other things. The context data may be obtained from phones or other devices present in the vehicle, from an application programming interface (API) to a service, via component connectivity of the vehicle, via a navigation computer or other components of the vehicle. In an example, the processing circuitry 110 is configured to obtain the context data from an edge device 125 (e.g., a roadside unit (RSU) or a cloud service 130).

The processing circuitry 110 is configured to derive a repetition metric based on the power consumption for the component in the time period. The repetition metric is a measurement of the repeatability of the power consumption. For example, if the time period is a month, and every Monday the vehicle is parked outside of a school for between twenty and forty minutes consuming power from a plug in a back seat-for example a small child watching a video on a tablet plugged into a port near their seat while a parent waits to pick up an older child-the repetition metric measures the repeatability of this power use in the time period. Thus, in an example, the repetition metric includes a periodicity of occurrences of the power consumption. The point of the repetition metric is to ascertain patterns of power use. It is these patterns of power use, or lack thereof, that will enable constructing a power policy for a scenario as described below. Note that, for some components, such as the navigation computer of the vehicle, the repetition metric can indicate that it is repeatedly not used during this time period.

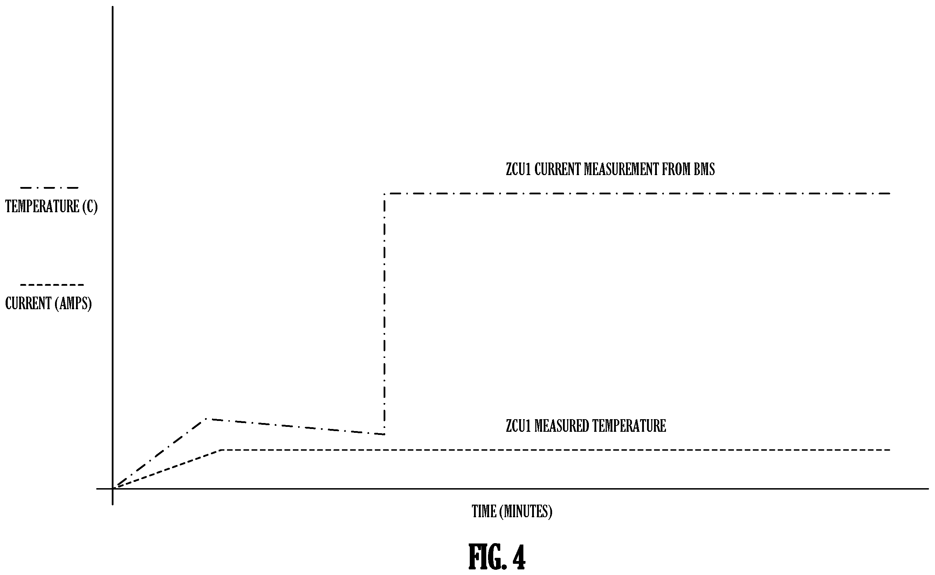

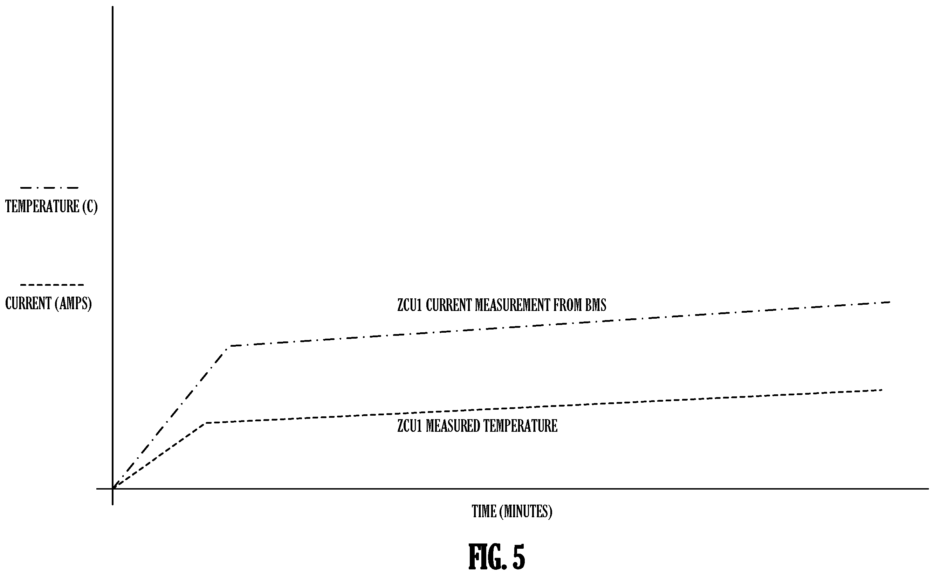

In an example, the repetition metric indicates that there is no repetition of the power consumption of the component. The lack of repetition may suggest that the power use (e.g., of a tablet or ECU) is not based on a regular pattern of use, and thus not indicative of a use case scenario. However, such use may indicate that there is a problem with the component. Accordingly, in an example, the processing circuitry 110 is configured to communicate (e.g., transmit, write to a log, produce a dashboard alert, etc.) a fault for the component. This is illustrated in FIG. 4 and FIG. 5 below, but generally, steady and increasing power consumption by the component (e.g., FIG. 5), coupled at time with increasing temperature, often indicates that the component is working less efficiently (e.g., aging or failing). In contrast, temporary and abrupt power spikes without attendant temperature increases (e.g., FIG. 4) often indicate an increased load due to a device being plugged in or a component (e.g., overhead light) being used and operating correctly.

The processing circuitry 110 is configured to locate a scenario context from the context data based on an occurrence of the power consumption in the time period and the repetition metric. This activity is filtering the context data based on time via a cooccurrence of the power consumption pattern in that time. Using the example above, the context data may include the vehicle being within range of fifteen APs in the month, but only one during a single period (e.g., the twenty to forty minutes each Monday) of the power consumption. Thus, the one AP from the context data that is sensed by the vehicle during that time is included in the scenario context data while the other APs are filtered out.

The scenario context data provides additional signals that a given power-use scenario is occurring. Thus, for example, the processing circuitry 110 can predict that a power use scenario is being entered, or about to be entered, before the power consumption pattern is sensed. This may, for example, enable the processing circuitry 110 to put the vehicle in a particular power policy as soon as the vehicle parks in the school parking lot before the tablet starts to draw power. In an example, where the repetition metric includes a periodicity of occurrences of the power consumption, the scenario context includes additional use of power by other components of the vehicle during a period of power consumption for the component. This example illustrates that the scenario context may also include power consumption information. This may be used to identify the scenario or, as noted below, to determine whether components (e.g., ECUs) may be put into a lower power state based on the scenario (e.g., an ability to predict that the scenario will likely last at least twenty minutes). In an example, the scenario context includes a schedule of activity for a user of the vehicle.

In an example, the scenario context includes a trip plan that includes a segment (e.g., leg, portion, stretch, etc.) of the trip plan that uses the vehicle. These last two examples both provide data indicating the possible duration of the scenario. The scenario duration may be important, for example, because it enables vehicle components to be put into a lower state of power use. Generally, the lower the state of power use, the longer it takes for the component to be usable. For a parked car, there is little need for a parking sensor to be activated, for example. However, it would probably negatively impact the user experience if the parking sensor took ten seconds to become active if the user wanted to drive away. The ability to predict the end of the scenario enables the parking sensor to be powered down during the majority of the predicted scenario timer period without the user being likely to notice a ten second activation period that occurs near the end of the scenario period.

The processing circuitry 110 is configured to create a vehicle power profile based on the scenario context. This power profile is a custom power profile for the identified scenario. In an example, where the scenario context includes additional use of power by other components of the vehicle during a period of power consumption for the component. In this case, the power profile includes reducing power consumption of a component in the other components that is not used during the period of power consumption. Here, components that are usually not put into a very low power state, such as vehicle security, may be put into a very-low power state because they are not used. Conversely, high-power elements, such as heating, ventilation, and air conditioning (HVAC) may be maintained because they are often used. This type of customization based on user use does not require the burden and overhead of design present in current power policy creation by an OEM, for example.

Another issue that can arise due to user power use is a loss of range for an electric vehicle. The continuous power monitoring, during non-driving scenarios, enables a more accurate range estimation (e.g., a more accurate determination of how much range was lost during the scenario) than is otherwise available. In an example, where the scenario context includes a trip plan that includes a segment of the trip plan that uses the vehicle, the power profile includes modifying a range estimate for the vehicle based on the power consumption. In an example, the range estimate is modified by weather, temperature, elevation, or route in the segment of the trip plan. These examples illustrate a customization to range estimates based on the occurrence of the scenario.

In an example, the range estimation, for example, based on the trip plan, may be continuously updated to indicate when, for example, a charging stop will be needed if non-driving power use continues. For example, if the user drives to a worksite and uses the saw 155, the saw 155 will drain the vehicle's power. If the trip plan includes a particular segment (e.g., to drive home, to a restaurant, etc.) in which the user needs the vehicle, then the continuous monitor may determine that the vehicle will need a charge to complete the segment if the saw 155 continues to be used. In this case, the processing circuitry 110 may be configured to alert the user (e.g., via a communication to a mobile phone of the user, to a display in the vehicle, etc.) that continued use of the saw 155 will result in a charging stop.

In an example, deriving the repetition metric, locating the scenario context, or creating the vehicle power profile are performed by an artificial intelligence model. Although a variety of statistical techniques may be directly applied to the log of power consumption to locate the boundaries of a use case scenario, modern artificial intelligence (AI) models are good at locating relevant data points and omitting noise via a variety of techniques. For example, a spiking neural network (SNN) using spike timing dependent plasticity (STDP) will tend to settle on patterns in input data automatically, enabling the emerging patterns to be distinguished and thus correlated to time. Other artificial neural networks (ANNs), such as recurrent neural networks (RNNs) or convolutional neural networks (CNNs) may be employed with either pre-trained models to classify input data or discern repetition in input data via a self-training technique (e.g., autoregressive techniques). Using one or more AI models can increase flexibility in implementation, reduce noise from the context or power consumption data, or otherwise improve efficiency of the system 105.

In an example, deriving the repetition metric, locating the scenario context, creating the vehicle power profile, or running (e.g., instantiating and executing) an AI model are performed by the edge device 125 or the cloud service 130. Thus, not all components need be performed on the vehicle itself by the processing circuitry 110.

Although the technique uses the power consumption and the repetition metric to filter the context data, the opposite may be used in an example. Here, patterns in the context data may be used to identify the scenario, such as a calendar entry and visibility to an AP. The power consumption of vehicle components or vehicle attached components may be measured during this period-or the portion of the continuous monitoring log selected by the period-to ascertain power use appropriate for the scenario.

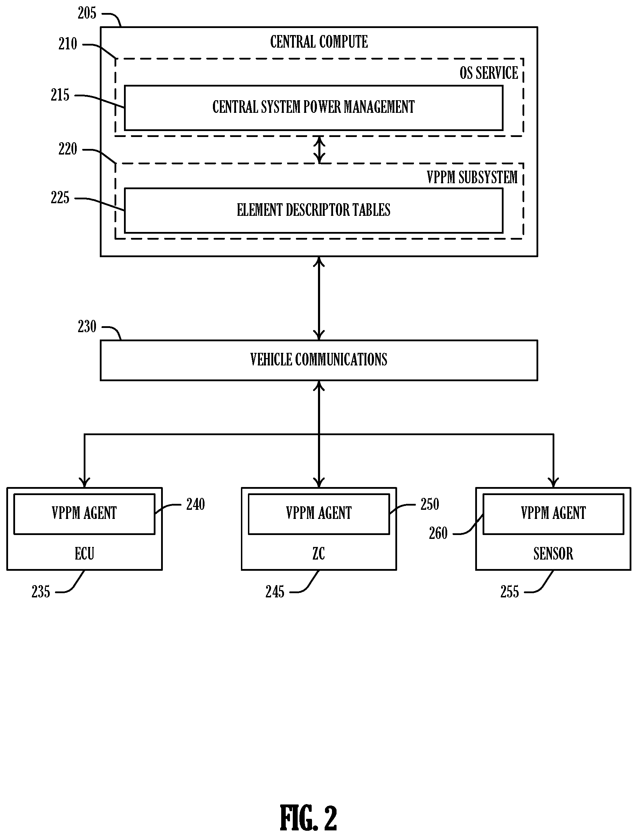

The processing circuitry 110 is configured to enable (e.g., install, deploy, activate, etc.) the power profile in the vehicle to control a power function. This enablement may include a momentary (e.g., for the predicted duration of the scenario plus or minus a boundary threshold) rewrite of a current power policy element or the wholesale replacement of a power policy in a control unit (e.g., the ECU 150). FIG. 2 illustrates some elements of such a policy rewrite in the context of the SAE J3311 family of standards.

In an example, once the power profile is created, the power profile may be stored, for example, in the storage 120 for later use. Thus, in an example, the processing circuitry 110 is configured to identify a scenario and write the stored version of the power profile to the vehicle.

FIG. 2 illustrates an example of a component organization, according to an embodiment. The illustrated components largely implement the SAE J3311 family of standards Overview of Components. In accordance with this standard, the following illustrates the Table of Vehicle Operating States.

| Power State | High Voltage System | Low Voltage Syste m | Active Subsystems | Wake-Up Speed |
|---|---|---|---|---|
| V0 (Normal Operating) | On | On | All systems (e.g., Propulsion, Infotainment, Climate Control, etc.) | Immediate |
| V1(Idle) | On | On | Limited (e.g., Accessories, HVAC) | Immediate |
| V2 (Accessory) | Selectable | On | Accessories Only (e.g., Lights, Infotainment) | Quick |
| V3 (Off) | Off | Available | Minimal (e.g., Security, Remote communication) | Extended |
| V4 (Hibernate) | Off | Available | Very Minimal (e.g., Security, Keyless Entry) | Extended |
| V5 (Charging) | Charging | Available | Limited (e.g., Prioritizes Charging) | Extended |

As illustrated, several elements are used to implement a vehicle topology. A VPPM subsystem 220 is configured to identify and control the VPPM Agents (e.g., agent 240, agent 250, agent 260) with element descriptors. A central system power management (CSPM) 215 engine in an operating system service 210 is configured to include an element descriptor table and software to compile and build a semantic representation ontology of the vehicle topology.

Operational components of a vehicle (e.g., all operational components of the vehicle)-such as an ECU 235, zone control 245, or sensor 255, etc.-include a VPPM agent (such as agent 240, agent 250, or agent 260). The VPPM agent is designed to host the element descriptor file. In an example, the element descriptor is a text or editable file that is loaded into every ECU or device in the vehicle system. The file contains the necessary data to describe the ECU or device, the power state parameters, and any optional signals. This file may be pre-configured by the OEM, or a Tier 1 provider based on agreed capability requirements in a technical specification or up to the ECU (or device vendor) to define per SAE J3311 guidelines.

An example of an element descriptor file content for a VPPM agent is shown below. The enablers for the semantic view of the system include the OEM pre-configured Component address and ID, the workload consumer and producer dependencies component ID(s), and the relevant communication interfaces and Node ID.

| **Static Data** | | | | |
|---|---|---|---|---|
| Component Address | | | | *E.g., IP or CAN physical address* |
| Component ID | | | | *E.g., Released part number or address depending on interface specification* |
| Component Name | | | | *E.g., Released component name* |
| Component Type | | | | *E.g., ECU or sensor* |
| Overall ASIL Rating | | | | |
| VPPM Agent SW Version | | | | |
| Wakeup method | | | | *E.g., Wake on LAN packet, discreet I*/*O* |
| Wakeup Timing | | | | *E.g., time to first message* |
| Sleep method | | | | *E.g., how to initiate sleep* |
| Sleep Timing | | | | *E.g., time to sleep* |
| Power State ID [E0..E2], [D0..D2] | | | | *E.g., ECU or device power state also used to build hierarchy in CSPM table, such as E0_0ComponentID* |
| -Transition Time | | | | *E.g., Time to enter power state* |
| -Context Preservation Dependency | | | | *E.g., does any memory need preservation if entering low power modes* |
| -Power Consumption | | | | *E.g., characterized or measured watts* |
| -Performance Level | | | | *E.g., impact to performance level, such as reduced CPU clock* |
| -Feature Name | | | | *E.g., ECO mode* |
| | --Function Name | | | *E.g., dampen torque request curve* |
| | --ASIL Requirement | | | |
| | --QoS Requirement | | | |
| | --CyberSecurity Requirement | | | |
| -Workload Consumer Dependencies | | | | *E.g., similar to subscriber nodes, includes sensor and actuators with any prerequisites* |
| | --Component ID(s) | | | *E.g., List of IDs from respective element descriptor including slave devices without TX*/*RX capability* |
| | | ---Communication Interfaces, Node ID | | *E.g., HSCAN or 1000BaseT1 and the Node ID to build CSPM graph table* |
| | | ---Power State ID | | *E.g., Couples the power policy dependence between components* |
| | | ---Power Passthrough, Device Dependencies | | *E.g., power over coax* to *rear camera or external relay control for non-smart device* |
| | | ---QoS Requirements | | |
| -Workload Producer Dependencies n | | | | *E.g., similar to publisher nodes, includes sensor and actuators with any prerequisites* |
| Component ID(s) | | | | |
| Communication Interfaces, Node ID | | | | |
| Power State ID | | | | |
| QoS Requirements | | | | |
| | | | | |

| **Dynamic Data** | | | | |
|---|---|---|---|---|
| Optional Signals | | | | *E.g., to be output at power up to VPPM Subsystem for CSPM visibility for future capability* |
| | Hardware Age | | | |
| | | Key cycles | | |
| | | | On time | *E.g., may be broken down to on time in different power states* |
| | | | Off time | *E.g., if available* |
| | Health Metrics over time | | | *E.g., factory vs current measurement difference* |
| | | Avg Voltage | | |
| | | Avg Current | | |
| | | Temperature | | |
| | | Impedance | | |

The CSPM subsystem 215 uses the information in the element descriptor file to command each VPPM agent (e.g., VPPM agents 240, 250, 260) to enable the various supported power states, after software is deployed to the vehicle that requires various vehicle power states. The VPPM subsystem 220 transmits the content of the element descriptor table 225, via the vehicle network interface of the vehicle platform communication system 230 (e.g., HS CAN, CAN-FD, 100BaseT1, 1GBaseT1, 10GBaseT1, or other networking embodiments), to the CSPM subsystem 215 running in the Central Compute node 205. This transmission builds out the element descriptor table 225 in the VPPM subsystem 220, operated within the Central Compute node 205; enabling the CSPM subsystem 215 to map vehicle power policies to the various ECU and device power modes.

The dependency mapping is used to create the linkage between ECU(s) and device(s) to enable interoperability. The dependency mapping is also used to prevent unintentional powering down of an ECU or device that has a functional requirement to be available under the vehicle power policy. Other dependencies such as Cyber Security and Functional Safety also may be incorporated.

An additional aspect of the topology is implemented within the CSPM subsystem 215. Within the vehicle system of systems, there may be a discovery ECU with CSPM software that hosts the element descriptor table 225 portion of the VPPM subsystem 220. Here, the key elements of the VPPM agents are mapped to different vehicle power policies driven by the Vehicle Power States.

The CSPM subsystem 215 uses the ECU and device dependencies including the consumer and producer component ID(s), communication interfaces, and node ID to build an ontology. The data within this mapping enables a feature or vehicle power state to be easily deployed and instantiated to only the relevant ECUs and devices. This also enables dependencies within this policy to be recognized for further capabilities or to eliminate potential conflicts or defects (for instance, turning off an ECU that provides data to another ECU for a feature that is not being turned off).

An example of a CSPM element descriptor table is shown below.

| **Vehicle Information** | | | |
|---|---|---|---|
| Vehicle Identifier | | *E.g.*, VIN | |
| Vehicle Platform Configuration | | *E.g., Vehicle E*/*E architecture version* | |
| Vehicle Make | | | |
| Vehicle Model | | | |
| Vehicle Year | | | |
| Vehicle CSPM Software Version | | | |
| Network Configuration | | | |
| | Number of nodes | *E.g., number of buses* | |
| | Types of communication interfaces | *E.g., list of HSCAN, ethernet, etc.* | |
| | | | |

| **Agent Information** | | | |
|---|---|---|---|
| CSPM Agent ID | | *E.g., creates the master Node* | |
| Host ECU Device ID or Address | | *E.g., pre-configured by OEM for send and ack protocol* | |
| | | | |
| **Element Descriptor Table** (*e.g.*, *Creates the tree graph of other nodes - driven by number of ECUs and Devices defined below)* | | | |
| Node ID | | *E.g., pre-configured by OEM* | |
| Number of ECUs | | *E.g., pre-configured by OEM* | |
| List ECU element descriptor data | | *E.g., Node dependency mapping and link between ECU and Devices* | |
| Number of Devices | | *E.g., pre-configured by OEM* | |
| List Device element descriptor data | | *E.g., Node dependency mapping and link between ECU and devices including slave devices without TX*/*RX capability* | |
| | | | |

| **Vehicle Power State Transition Table** | | | |
|---|---|---|---|
| Vehicle Power State [V0..V5] | | | E.g., Defines the vehicle power state from driver or telemetry inputs |
| Entry Criteria | | | E.g., driver or telemetry API data dependency |
| Exit Criteria | | | E.g., driver or telemetry API data dependency |
| Vehicle Power Policy name | | | *E.g., repeated if user input can change power policy (such as if a button press turns a feature off)* |
| | Participating ECU ID(s) or addresses | | *E.g., pre-configured by OEM - this is a list with ID and power state* |
| | | Power State ID [E0..E3] | *E.g., Each ECU has a pre mapped Power State ID for CSPM to command enter from VPPM agent* |
| | Participating Device ID(s) or addresses | | *E.g., pre-configured by OEM - this is a list with ID and power state* |
| | | Power State ID [D0..D2] | *E.g., Each ECU has a pre mapped Power State ID for CSPM to command enter from VPPM agent* |
| | Participating Nodes | | *E.g., used for topology and command routing* |

Within the CSPM element descriptor table, is the complete vehicle list of all component IDs and addresses broken down by each node. This is pre-configured and easily extracted from the existing component element descriptor files. During vehicle development, the OEM system engineering team will conceptualize various vehicle power states (e.g., park, drive, city drive, highway drive, stoplight, etc.) and map these vehicle power state transitions to vehicle power policies. The vehicle power policies then map to specific ECU or Device power modes while maintaining any dependencies (e.g. cannot turn off a functional safety (FuSa) related ECU or ADAS ECU when in certain mode).

Once the CSPM and element descriptor files are complete a semantic representation may be generated by computer software with capabilities to decode all the Node IDs, their relevant ECU and device elements and map them in an ontology. This semantic representation may be useful for visualizing and modifying multiple aspects and relationships of operational policies and power dependencies.

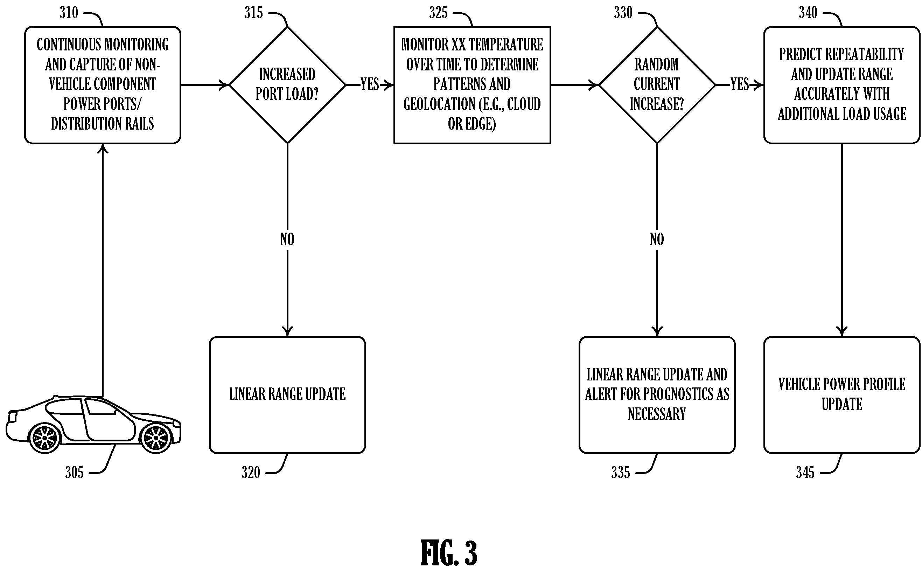

FIG. 3 illustrates an example of operations to implement power management impacted by non-vehicle components, according to an embodiment. This activity may be called detection and isolation of increased power consumption enabling an updated vehicle power policy. Once pre-configured power policies from the OEM manufacturing image (e.g., described above) are in the field, an AI model may be used to continuously update the power policy or maintain accurate range estimation due to added power consumption from user devices versus a component failure.

As illustrated, power consumption at the vehicle 305 is continuously monitored (operation 310). If there is no increased load on a port (decision 315), then a linear range update (operation 320) may be used to provide reduced range during a time period. If there is increased load on a port (decision 315), then other context data, such as temperature, geolocation, etc. is monitored (operation 325). This data is used to determine if there is a pattern (e.g., constantly increasing) or whether, for example, the power consumption increase is random (e.g., unexpected) (decision 330). If the increased power consumption is not random, there may be a problem with the component and a prognostic report along with a linear range update may be performed (operation 335). Otherwise, a prediction on the repeatability (e.g., a repetition metric) may be made based on the additional load (340) and the power profile may be updated (operation 345) with, for example, a new scenario.

In an example, existing real-time technology that is either already integrated into the vehicle or available to be integrated such as current sensing (power consumption calculation key input) within the Battery Management System, power distribution system, or directly from the 12V, 5V USB, 120VAC inverter, or vehicle to grid/worksite high power ports may be used in the power consumption monitoring. All available ports may be monitored (e.g., logged) during various vehicle power states for usage. The supported vehicle power states may include accessory, limited time during off (e.g., less than 20 minutes), and charging states where the low and high voltage systems are available and may be available. The monitored data may be processed at a peripheral ECU, in the central compute ECU, at an edge device (e.g., an RSU), or in a cloud service.

When the vehicle 305 has power consumption measurement capability at each user accessible power port, battery management system, power distribution center, or the inverter, the AI model may be configured (e.g., trained) to continuously monitor the entire vehicle power system in real time and determine if there are increases or spikes in power demands in addition to access to ECU and device temperature measurements. Once a vehicle is deployed with SAE J3311 compliant capabilities and the enhanced power monitoring algorithms, if a user plugs a device into an available charge port it is recognized, and monitoring may be enabled. The system may continue to track this usage during a current drive time and monitor exterior ambient and interior/ECU/Device temperatures, time, and geolocations to create an event log. This data may be continuously maintained in the system (e.g., edge, central compute, or cloud) and repeat the process when a change in power dissipation is detected again.

If it is determined that this is a repeat power consumption utilization, a new vehicle power policy may be deployed to reflect this specific scenario as a learned recurring event. Once the vehicle power policy is deployed, the remaining charge capacity or range estimation accuracy may increase, and if the vehicle determines that it is about to enter a known policy due to its location and time of departure, for example, may switch to the new power policy based on a predication that a device will be powered and impact its range. The same technique may be applied to various power distribution buses in the vehicle as well in the event a user taps directly into the wiring harness.

The technique described here also enables differentiation between prognostics or component aging diagnostics and a user powering an auxiliary device. As the AI model and system power policies become more contextually aware of how a user typically uses its available power resources (e.g., adding a "tap a fuse" to hard wire a dash cam or external amplifier) they will differentiate prognostics and component aging power consumption. Because the user usage will typically result in a sudden increase in power consumption, and continues to trend in a repeated pattern, any other steady increases in power consumption or large spikes may be isolated and analyzed to determine if there is a hardware failure event occurring. Combining the power consumption measurement capability with the temperature measurements available within various ECU and devices the AI model will enable predictions of pending failures by measuring an increase in both power and heat and a possible drop in performance or feature degradation or availability described in the VPPM agent.

Determining and acting upon the repeatable usage patterns of non-driving behavior using, for example, an AI model in order to maintain an accurate range estimation and implement (e.g., update) power policies for powering down unnecessary subsystems the end user does not use is an improvement on current systems. The usage pattern is continuously maintained (e.g., on certain days there are tablets charging in back seat or a worksite is powered) so the end user will always be informed of a more precise range and the vehicle can maintain accurate power policies to power down unnecessary subsystems. If unused sub systems are required by the end user the vehicle will be capable to bring them back online. For example, if a user has not used rear seat entertainment for several months but in one instance requests it, the vehicle can power the rear seat entertainment displays and that portion of the HPC that was previously unpowered. Thus, the added power draw of non-vehicle components (e.g., accessories like a phone, a dashcam, or another "tap a fuse" installed product, etc.) and their usage patterns are combined into the overall vehicle range calculation and power optimization profile leveraging historic data and predictive insights to enable a more real time range calculation and power policy.

FIG. 4 illustrates a current and temperature plot over time indicating a component was added, according to an embodiment. An example is shown here where the current draw and temperature of a control unit ZCU1 are plotted over time. Here, a Battery Management System detects an almost instant spike in current demand (e.g. accessory power on from wire harness) on the same power distribution system port that ZCU1 is connected to, however a trained AI model provides a correlation that ZCU1 internal temperatures are not increasing-which would be the case due to increased power consumption as shown in FIG. 5-and therefore provide a signal that the increase in demand is due to a load applied by the user.

FIG. 5 illustrates a current and temperature plot over time indicating a component failure, according to an embodiment. Here, prognostics or component aging may be determined via a slower increase in temperature and current as illustrated. Failure diagnostics may also show sudden non-recurring spikes in power consumption that are not repeatable, therefore not a user powering an accessory or other component.

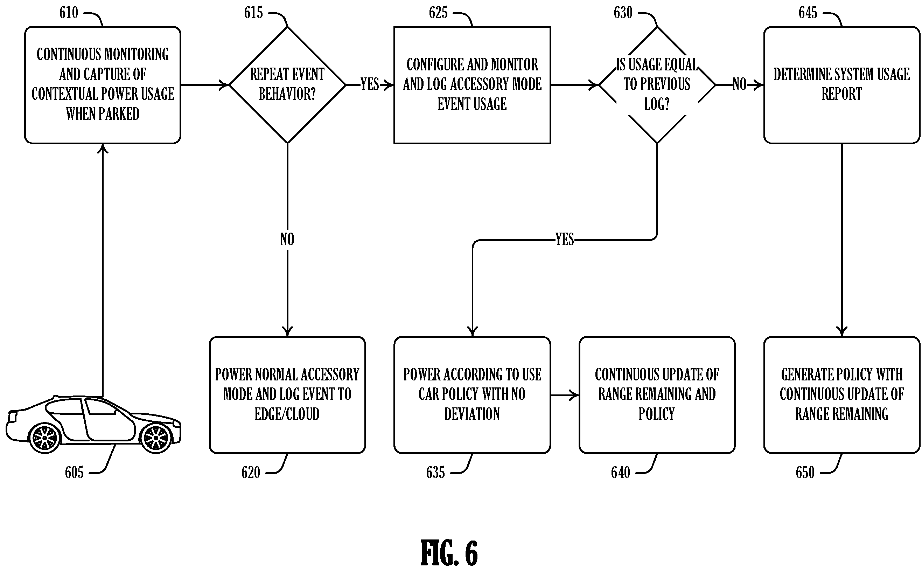

FIG. 6 illustrates an example of operations to implement power management impacted by vehicle components, according to an embodiment. By monitoring power usage (operation 610) when an electric vehicle 605 is in accessory, charging, or Off state-such as during movie watching or game playing-the SAE J3311 architecture (e.g., FIG. 2) may be used.

As illustrated, power consumption of a component while the vehicle 605 is parked is continuously monitored (operation 610). If an analysis of the power consumption indicates that the consumption is not repetitive (decision 615), the power profile remains unchanged but an event (e.g., additional power load) may be recorded (operation 620.

If a repetitive event is detected (decision 615), then additional power consumption may be logged (operation 625). If this data indicates that the power use is equal to a previous incarnation of the event, then the power policy (e.g., for the scenario represented by the event) may be implemented (operation 635) and continuous updates to vehicle range may be made (operation 640). Otherwise (decision 630), the power usage is tracked (operation 645) and used to update the policy (e.g., with an additional component as part of the scenario) and the vehicle range updated (operation 650).

For example, a trained AI model monitors the vehicle power policies and power consumption patterns with additional vehicle contextual data to determine whether the situation is a repeat behavior or not, including insight into the specific usage of the vehicle and sub systems. If a repeat behavior of the vehicle system is detected, the vehicle power policy is replaced. If a situation arises with similar behavior the system may power down unnecessary subsystems or components based on the event and the remaining battery life, ensuring enough power is conserved to reach the closest charging port, home, or the next planned stop by constant update of the vehicle power policy in the CSPM.

In an example, the system may alert the user to these adjustments and maintain an accurate range estimation visible (e.g., on a vehicle display) for user awareness. In an example, the management of power for active subsystems may consider relevant contextual information such as weather conditions, location, or the type of terrain the vehicle is on (e.g. leave Heat on during cold exterior temperatures or the parking brakes on a hill). In an example, the system may calculate the remaining battery run-time during the vehicle accessory, charge, or off state by considering this contextual information, which may include the distance back home, the nearest charger, or details of a planned camping trip entered through the car's app, ensuring that the vehicle's energy resources are used efficiently.

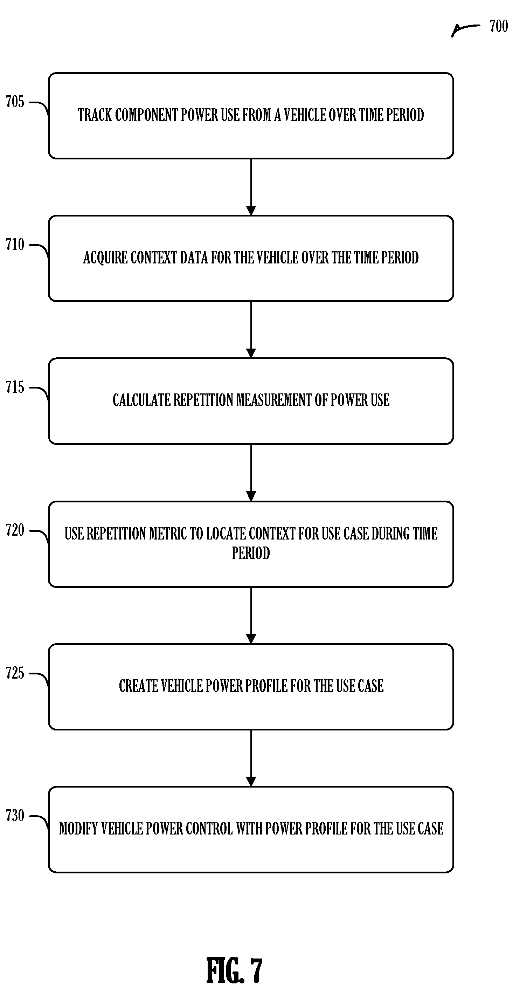

FIG. 7 illustrates a flow diagram of an example of a method 700 for vehicle power management, according to an embodiment. The operations of the method 700 are performed by computational hardware, such as that described above or below (e.g., processing circuitry).

At operation 705, a log of power use for a component connected to a power supply of a vehicle is obtained (e.g., retrieved, received, created, etc.). This log includes a time-based record of power consumption for the component over a time period. In an example, the component is installed in the vehicle. In an example, the component is powered by a plug or wireless port of the vehicle.

At operation 710, context data for the time period is obtained.

At operation 715, a repetition metric is derived based on the power consumption for the component in the time period. In an example, the repetition metric includes a periodicity of occurrences of the power consumption.

In an example, the repetition metric indicates that there is no repetition of the power consumption of the component. In an example, the method 700 may be extended to including the operation of communicating a fault for the component.

At operation 720, a scenario context is located from the context data based on an occurrence of the power consumption in the time period and the repetition metric. In an example, where the repetition metric includes a periodicity of occurrences of the power consumption, the scenario context includes additional use of power by other components of the vehicle during a period of power consumption for the component.

In an example, the scenario context includes a schedule of activity for a user of the vehicle. In an example, the scenario context includes a trip plan that includes a segment of the trip plan that uses the vehicle.

At operation 725, a vehicle power profile is created based on the scenario context. In an example, where the scenario context includes additional use of power by other components of the vehicle during a period of power consumption for the component. The power profile includes reducing power consumption of a component in the other components that is not used during the period of power consumption.

In an example, where the scenario context includes a trip plan that includes a segment of the trip plan that uses the vehicle, the power profile includes modifying a range estimate for the vehicle based on the power consumption. In an example, the range estimate is modified by weather, temperature, elevation, or route in the segment of the trip plan. In an example, deriving the repetition metric, locating the scenario context, or creating the vehicle power profile are performed by an artificial intelligence model.

At operation 730, the power profile is enabled in the vehicle to control a power function. In an example, the power profile conforms to a Society of Automotive Engineers (SAE) J3311 family of standards.

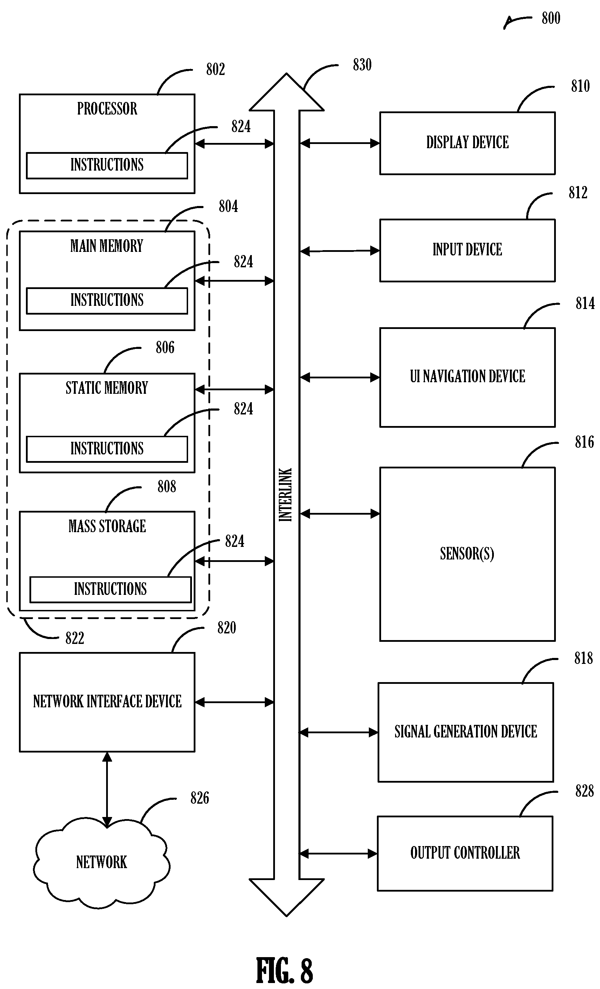

FIG. 8 illustrates a block diagram of an example machine 800 upon which any one or more of the techniques (e.g., methodologies) discussed herein may perform. Examples, as described herein, may include, or may operate by, logic or a number of components, or mechanisms in the machine 800. Circuitry (e.g., processing circuitry) is a collection of circuits implemented in tangible entities of the machine 800 that include hardware (e.g., simple circuits, gates, logic, etc.). Circuitry membership may be flexible over time. Circuitries include members that may, alone or in combination, perform specified operations when operating. In an example, hardware of the circuitry may be immutably designed to carry out a specific operation (e.g., hardwired). In an example, the hardware of the circuitry may include variably connected physical components (e.g., execution units, transistors, simple circuits, etc.) including a machine readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the machine 800 follow.

In alternative embodiments, the machine 800 may operate as a standalone device or may be connected (e.g., networked) to other machines. In a networked deployment, the machine 800 may operate in the capacity of a server machine, a client machine, or both in server-client network environments. In an example, the machine 800 may act as a peer machine in peer-to-peer (P2P) (or other distributed) network environment. The machine 800 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

The machine (e.g., computer system) 800 may include a hardware processor 802 (e.g., a central processing unit (CPU), a graphics processing unit (GPU), a hardware processor core, or any combination thereof), a main memory 804, a static memory (e.g., memory or storage for firmware, microcode, a basic-input-output (BIOS), unified extensible firmware interface (UEFI), etc.) 806, and mass storage 808 (e.g., hard drives, tape drives, flash storage, or other block devices) some or all of which may communicate with each other via an interlink (e.g., bus) 830. The machine 800 may further include a display unit 810, an alphanumeric input device 812 (e.g., a keyboard), and a user interface (UI) navigation device 814 (e.g., a mouse). In an example, the display unit 810, input device 812 and UI navigation device 814 may be a touch screen display. The machine 800 may additionally include a storage device (e.g., drive unit) 808, a signal generation device 818 (e.g., a speaker), a network interface device 820, and one or more sensors 816, such as a global positioning system (GPS) sensor, compass, accelerometer, or other sensor. The machine 800 may include an output controller 828, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

Registers of the processor 802, the main memory 804, the static memory 806, or the mass storage 808 may be, or include, a machine readable medium 822 on which is stored one or more sets of data structures or instructions 824 (e.g., software) embodying or utilized by any one or more of the techniques or functions described herein. The instructions 824 may also reside, completely or at least partially, within any of registers of the processor 802, the main memory 804, the static memory 806, or the mass storage 808 during execution thereof by the machine 800. In an example, one or any combination of the hardware processor 802, the main memory 804, the static memory 806, or the mass storage 808 may constitute the machine readable media 822. While the machine readable medium 822 is illustrated as a single medium, the term "machine readable medium" may include a single medium or multiple media (e.g., a centralized or distributed database, and/or associated caches and servers) configured to store the one or more instructions 824.

The term "machine readable medium" may include any medium that is capable of storing, encoding, or carrying instructions for execution by the machine 800 and that cause the machine 800 to perform any one or more of the techniques of the present disclosure, or that is capable of storing, encoding or carrying data structures used by or associated with such instructions. Nonlimiting machine readable medium examples may include solid-state memories, optical media, magnetic media, and signals (e.g., radio frequency signals, other photon based signals, sound signals, etc.). In an example, a non-transitory machine readable medium comprises a machine readable medium with a plurality of particles having invariant (e.g., rest) mass, and thus are compositions of matter. Accordingly, non-transitory machine-readable media are machine readable media that do not include transitory propagating signals. Specific examples of non-transitory machine readable media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

In an example, information stored or otherwise provided on the machine readable medium 822 may be representative of the instructions 824, such as instructions 824 themselves or a format from which the instructions 824 may be derived. This format from which the instructions 824 may be derived may include source code, encoded instructions (e.g., in compressed or encrypted form), packaged instructions (e.g., split into multiple packages), or the like. The information representative of the instructions 824 in the machine readable medium 822 may be processed by processing circuitry into the instructions to implement any of the operations discussed herein. For example, deriving the instructions 824 from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions 824.

In an example, the derivation of the instructions 824 may include assembly, compilation, or interpretation of the information (e.g., by the processing circuitry) to create the instructions 824 from some intermediate or preprocessed format provided by the machine readable medium 822. The information, when provided in multiple parts, may be combined, unpacked, and modified to create the instructions 824. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable etc.) at a local machine, and executed by the local machine.

The instructions 824 may be further transmitted or received over a communications network 826 using a transmission medium via the network interface device 820 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), LoRa/LoRaWAN, or satellite communication networks, mobile telephone networks (e.g., cellular networks such as those complying with 3G, 4G LTE/LTE-A, or 5G standards), Plain Old Telephone (POTS) networks, and wireless data networks (e.g., Institute of Electrical and Electronics Engineers (IEEE) 802.11 family of standards known as Wi-Fi^{®}, IEEE 802.15.4 family of standards, peer-to-peer (P2P) networks, among others. In an example, the network interface device 820 may include one or more physical jacks (e.g., Ethernet, coaxial, or phone jacks) or one or more antennas to connect to the communications network 826. In an example, the network interface device 820 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 800, and includes digital or analog communications signals or other intangible medium to facilitate communication of such software. A transmission medium is a machine readable medium.

### Additional Notes & Examples

Example 1 is an apparatus for vehicle power management, the apparatus comprising: a memory including instructions; and processing circuitry, configured by the instructions when in operation, to: obtain a log of power use for a component connected to a power supply of a vehicle, the log including a time-based record of power consumption for the component over a time period; obtain context data for the time period; derive a repetition metric based on the power consumption for the component in the time period; locate a scenario context from the context data based on an occurrence of the power consumption in the time period and the repetition metric; create a vehicle power profile based on the scenario context; and enable the vehicle power profile in the vehicle to control a power function.

In Example 2, the subject matter of Example 1, wherein the repetition metric includes a periodicity of occurrences of the power consumption.

In Example 3, the subject matter of Example 2, wherein the scenario context includes additional use of power by other components of the vehicle during a period of power consumption for the component.

In Example 4, the subject matter of Example 3, wherein the vehicle power profile includes reducing power consumption of a component in the other components that is not used during the period of power consumption.

In Example 5, the subject matter of any of Examples 2-4, wherein the scenario context includes a schedule of activity for a user of the vehicle.

In Example 6, the subject matter of any of Examples 2-5, wherein the scenario context includes a trip plan that includes a segment of the trip plan that uses the vehicle.

In Example 7, the subject matter of Example 6, wherein the vehicle power profile includes modifying a range estimate for the vehicle based on the power consumption.

In Example 8, the subject matter of Example 7, wherein the range estimate is modified by weather, temperature, elevation, or route in the segment of the trip plan.

In Example 9, the subject matter of any of Examples 1-8, wherein the component is installed in the vehicle.

In Example 10, the subject matter of any of Examples 1-9, wherein the component is powered by a plug or wireless port of the vehicle.

In Example 11, the subject matter of any of Examples 1-10, wherein the repetition metric indicates that there is no repetition of the power consumption of the component.

In Example 12, the subject matter of Example 11, wherein the processing circuitry is, when in operation, configured by the instructions to communicate a fault for the component.

In Example 13, the subject matter of any of Examples 1-12, wherein the vehicle power profile conforms to a Society of Automotive Engineers (SAE) J3311 family of standards.

In Example 14, the subject matter of any of Examples 1-13, wherein a portion of the processing circuitry invokes an artificial intelligence model to derive the repetition metric, to locate the scenario context, or to create the vehicle power profile.

Example 15 is a method for vehicle power management, the method comprising: obtaining a log of power use for a component connected to a power supply of a vehicle, the log including a time-based record of power consumption for the component over a time period; obtaining context data for the time period; deriving a repetition metric based on the power consumption for the component in the time period; locating a scenario context from the context data based on an occurrence of the power consumption in the time period and the repetition metric; creating a vehicle power profile based on the scenario context; and enabling the vehicle power profile in the vehicle to control a power function.

In Example 16, the subject matter of Example 15, wherein the repetition metric includes a periodicity of occurrences of the power consumption.

In Example 17, the subject matter of Example 16, wherein the scenario context includes additional use of power by other components of the vehicle during a period of power consumption for the component.

In Example 18, the subject matter of Example 17, wherein the vehicle power profile includes reducing power consumption of a component in the other components that is not used during the period of power consumption.

In Example 19, the subject matter of any of Examples 16-18, wherein the scenario context includes a schedule of activity for a user of the vehicle.

In Example 20, the subject matter of any of Examples 16-19, wherein the scenario context includes a trip plan that includes a segment of the trip plan that uses the vehicle.

In Example 21, the subject matter of Example 20, wherein the vehicle power profile includes modifying a range estimate for the vehicle based on the power consumption.

In Example 22, the subject matter of Example 21, wherein the range estimate is modified by weather, temperature, elevation, or route in the segment of the trip plan.

In Example 23, the subject matter of any of Examples 15-22, wherein the component is installed in the vehicle.

In Example 24, the subject matter of any of Examples 15-23, wherein the component is powered by a plug or wireless port of the vehicle.

In Example 25, the subject matter of any of Examples 15-24, wherein the repetition metric indicates that there is no repetition of the power consumption of the component.

In Example 26, the subject matter of Example 25, comprising communicating a fault for the component.

In Example 27, the subject matter of any of Examples 15-26, wherein the vehicle power profile conforms to a Society of Automotive Engineers (SAE) J3311 family of standards.

In Example 28, the subject matter of any of Examples 15-27, wherein deriving the repetition metric, locating the scenario context, or creating the vehicle power profile are performed by an artificial intelligence model.

Example 29 is at least one machine readable medium including instructions for vehicle power management, the instructions, when executed by processing circuitry, cause the processing circuitry to perform operations comprising: obtaining a log of power use for a component connected to a power supply of a vehicle, the log including a time-based record of power consumption for the component over a time period; obtaining context data for the time period; deriving a repetition metric based on the power consumption for the component in the time period; locating a scenario context from the context data based on an occurrence of the power consumption in the time period and the repetition metric; creating a vehicle power profile based on the scenario context; and enabling the vehicle power profile in the vehicle to control a power function.

In Example 30, the subject matter of Example 29, wherein the repetition metric includes a periodicity of occurrences of the power consumption.

In Example 31, the subject matter of Example 30, wherein the scenario context includes additional use of power by other components of the vehicle during a period of power consumption for the component.

In Example 32, the subject matter of Example 31, wherein the vehicle power profile includes reducing power consumption of a component in the other components that is not used during the period of power consumption.

In Example 33, the subject matter of any of Examples 30-32, wherein the scenario context includes a schedule of activity for a user of the vehicle.

In Example 34, the subject matter of any of Examples 30-33, wherein the scenario context includes a trip plan that includes a segment of the trip plan that uses the vehicle.

In Example 35, the subject matter of Example 34, wherein the vehicle power profile includes modifying a range estimate for the vehicle based on the power consumption.

In Example 36, the subject matter of Example 35, wherein the range estimate is modified by weather, temperature, elevation, or route in the segment of the trip plan.

In Example 37, the subject matter of any of Examples 29-36, wherein the component is installed in the vehicle.

In Example 38, the subject matter of any of Examples 29-37, wherein the component is powered by a plug or wireless port of the vehicle.

In Example 39, the subject matter of any of Examples 29-38, wherein the repetition metric indicates that there is no repetition of the power consumption of the component.

In Example 40, the subject matter of Example 39, wherein the operations comprise communicating a fault for the component.

In Example 41, the subject matter of any of Examples 29-40, wherein the vehicle power profile conforms to a Society of Automotive Engineers (SAE) J3311 family of standards.

In Example 42, the subject matter of any of Examples 29-41, wherein deriving the repetition metric, locating the scenario context, or creating the vehicle power profile are performed by an artificial intelligence model.

Example 43 is a system for vehicle power management, the system comprising: means for obtaining a log of power use for a component connected to a power supply of a vehicle, the log including a time-based record of power consumption for the component over a time period; means for obtaining context data for the time period; means for deriving a repetition metric based on the power consumption for the component in the time period; means for locating a scenario context from the context data based on an occurrence of the power consumption in the time period and the repetition metric; means for creating a vehicle power profile based on the scenario context; and means for enabling the vehicle power profile in the vehicle to control a power function.

In Example 44, the subject matter of Example 43, wherein the repetition metric includes a periodicity of occurrences of the power consumption.

In Example 45, the subject matter of Example 44, wherein the scenario context includes additional use of power by other components of the vehicle during a period of power consumption for the component.

In Example 46, the subject matter of Example 45, wherein the vehicle power profile includes reducing power consumption of a component in the other components that is not used during the period of power consumption.

In Example 47, the subject matter of any of Examples 44-46, wherein the scenario context includes a schedule of activity for a user of the vehicle.

In Example 48, the subject matter of any of Examples 44-47, wherein the scenario context includes a trip plan that includes a segment of the trip plan that uses the vehicle.

In Example 49, the subject matter of Example 48, wherein the vehicle power profile includes modifying a range estimate for the vehicle based on the power consumption.

In Example 50, the subject matter of Example 49, wherein the range estimate is modified by weather, temperature, elevation, or route in the segment of the trip plan.

In Example 51, the subject matter of any of Examples 43-50, wherein the component is installed in the vehicle.

In Example 52, the subject matter of any of Examples 43-51, wherein the component is powered by a plug or wireless port of the vehicle.

In Example 53, the subject matter of any of Examples 43-52, wherein the repetition metric indicates that there is no repetition of the power consumption of the component.

In Example 54, the subject matter of Example 53, comprising means for communicating a fault for the component.

In Example 55, the subject matter of any of Examples 43-54, wherein the vehicle power profile conforms to a Society of Automotive Engineers (SAE) J3311 family of standards.

In Example 56, the subject matter of any of Examples 43-55, wherein the means for deriving the repetition metric, the means for locating the scenario context, or the means for creating the vehicle power profile are performed by an artificial intelligence model.

Example 57 is at least one machine-readable medium including instructions that, when executed by processing circuitry, cause the processing circuitry to perform operations to implement of any of Examples 1-56.

Example 58 is an apparatus comprising means to implement of any of Examples 1-56.

Example 59 is a system to implement of any of Examples 1-56.

Example 60 is a method to implement of any of Examples 1-56.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

All publications, patents, and patent documents referred to in this document are incorporated by reference herein in their entirety, as though individually incorporated by reference. In the event of inconsistent usages between this document and those documents so incorporated by reference, the usage in the incorporated reference(s) should be considered supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the embodiments should be determined with reference to the appended claims, along with the full scope of equivalents to which such claims are entitled.

## Claims

1. A method for vehicle power management, the method comprising:
obtaining a log of power use for a component connected to a power supply of a vehicle, the log including a time-based record of power consumption for the component over a time period;
obtaining context data for the time period;
deriving a repetition metric based on the power consumption for the component in the time period;
locating a scenario context from the context data based on an occurrence of the power consumption in the time period and the repetition metric;
creating a vehicle power profile based on the scenario context; and
enabling the vehicle power profile in the vehicle to control a power function.

2. The method of claim 1, wherein the repetition metric includes a periodicity of occurrences of the power consumption.

3. The method of claim 2, wherein the scenario context includes additional use of power by other components of the vehicle during a period of power consumption for the component.

4. The method of claim 3, wherein the vehicle power profile includes reducing power consumption of a component in the other components that is not used during the period of power consumption.

5. The method of any of claims 2-4, wherein the scenario context includes a schedule of activity for a user of the vehicle.

6. The method of any of claims 2-5, wherein the scenario context includes a trip plan that includes a segment of the trip plan that uses the vehicle.

7. The method of claim 6, wherein the vehicle power profile includes modifying a range estimate for the vehicle based on the power consumption.

8. The method of claim 7, wherein the range estimate is modified by weather, temperature, elevation, or route in the segment of the trip plan.

9. The method of any of claims 1-8, wherein the component is powered by a plug or wireless port of the vehicle.

10. The method of any of claims 1-9, wherein the repetition metric indicates that there is no repetition of the power consumption of the component.

11. The method of claim 10, comprising communicating a fault for the component.

12. The method of any of claims 1-11, wherein the vehicle power profile conforms to a Society of Automotive Engineers, SAE, J3311 family of standards.

13. The method of any of claims 1-12, wherein deriving the repetition metric, locating the scenario context, or creating the vehicle power profile are performed by an artificial intelligence model.

14. A system comprising means to perform any method of claims 1-13.

15. At least one machine readable medium including instructions that, when executed by processing circuitry, cause the processing circuitry to perform any method of claims 1-13.
